# EUROPEAN PATENT APPLICATION

(11) **EP 4 129 892 A1**
(43) Date of publication of application: **08.02.2023**
(21) Application number: 21776074.3
(22) Date of filing: 24.03.2021
(51) Int. Cl.: C01B 3/22, C01B 3/56, C07C 5/367, C07C 15/06, H01M 8/04, H01M 8/0606, H01M 8/0662

(54) **HYDROGEN SUPPLY SYSTEM**

(30) Priority: 27.03.2020 JP 2020057610
(71) Applicant: ENEOS Corporation, Chiyoda-ku Tokyo 100-8162 (JP)
(72) Inventor: SEIKE Tadashi, Tokyo 100-8162 (JP); IKI Hideshi, Tokyo 100-8162 (JP); MAEDA Seiji, Tokyo 100-8162 (JP)
(74) Representative: Grünecker Patent- und Rechtsanwälte PartG mbB
(86) International application number: PCT/JP2021/012396
(87) International publication number: WO 2021/193767

(57) **Abstract**

Provided is a hydrogen supply system that supplies hydrogen. The hydrogen supply system includes: a dehydrogenation reaction unit that subjects a raw material including a hydride to a dehydrogenation reaction to obtain a hydrogen-containing gas; a hydrogen purification unit that removes a dehydrogenation product from the hydrogen-containing gas obtained in the dehydrogenation reaction unit to obtain a purified gas including high-purity hydrogen; and a degassing unit that removes an inorganic gas contained in the raw material on an upstream side of the dehydrogenation reaction unit in a flow of the raw material.

## Description

### Technical Field

The present disclosure relates to a hydrogen supply system that supplies hydrogen.

### Background Art

As a hydrogen supply system in the related art, for example, a hydrogen supply system disclosed in Patent Literature 1 is known. The hydrogen supply system disclosed in Patent Literature 1 includes a tank that store a hydride of aromatic hydrocarbon as a raw material, a dehydrogenation reaction unit that subjects the raw material supplied from the tank to a dehydrogenation reaction to obtain hydrogen, a gas-liquid separation unit for gas-liquid separation of the hydrogen obtained in the dehydrogenation reaction unit, and a hydrogen purification unit that purifies the gas-liquid separated hydrogen.

### Citation List

### Patent Literature

Patent Literature 1: Japanese Unexamined Patent Publication No. 2006-232607

### Summary of Invention

### Technical Problem

In the above-described hydrogen supply system, an inorganic gas such as oxygen and nitrogen may be contained in a raw material. The inorganic gas component is also contained in a hydrogen-containing gas after dehydrogenation. In addition, in the inorganic gas, oxygen generates water during a dehydrogenation reaction, and thus a dew point of the hydrogen-containing gas is raised. In this case, a purification load in a hydrogen purification unit increases. As described above, there is a problem that the purification load of the hydrogen purification unit is high. Therefore, it is necessary to remove the inorganic gas from the hydrogen-containing gas.

The present disclosure has been made to solve the above-described problem, and an object thereof is to provide a hydrogen supply system capable of reducing a purification load of a hydrogen purification unit.

### Solution to Problem

To solve the above-described problem, according to an aspect of the present disclosure, there is provided a hydrogen supply system that supplies hydrogen. The hydrogen supply system includes: a dehydrogenation reaction unit that subjects a raw material including a hydride to a dehydrogenation reaction to obtain a hydrogen-containing gas; a hydrogen purification unit that removes a dehydrogenation product from the hydrogen-containing gas obtained in the dehydrogenation reaction unit to obtain a purified gas including high-purity hydrogen; and a degassing unit that removes an inorganic gas contained in the raw material on an upstream side of the dehydrogenation reaction unit in a flow of the raw material.

In the hydrogen supply system, the dehydrogenation reaction unit subjects a raw material to a dehydrogenation reaction to obtain a hydrogen-containing gas. In addition, the hydrogen purification unit removes a dehydrogenation product from the hydrogen-containing gas obtained in the dehydrogenation reaction unit to obtain a purified gas including high-purify hydrogen. Accordingly, a purification load of the hydrogen purification unit may be influenced by a component contained in the hydrogen-containing gas from the dehydrogenation reaction unit. In contrast, the hydrogen supply system includes the degassing unit that removes an inorganic gas contained in a raw material on an upstream side of the dehydrogenation reaction unit in a flow of the raw material. In this case, the dehydrogenation reaction unit can subject a raw material in a state in which the inorganic gas is removed by the degassing unit to the dehydrogenation reaction. According to this, it is possible to reduce the purification load of the hydrogen purification unit due to the inorganic gas contained in the hydrogen-containing gas. As described above, the purification load of the hydrogen purification unit can be reduced.

In the hydrogen supply system, the degassing unit may be constituted by a degassing membrane separator. According to this, the degassing unit can efficiently remove the inorganic gas from the raw material.

### Advantageous Effects of Invention

According to the present disclosure, it is possible to provide a hydrogen supply system capable of reducing a purification load of a hydrogen purification unit.

### Brief Description of Drawings

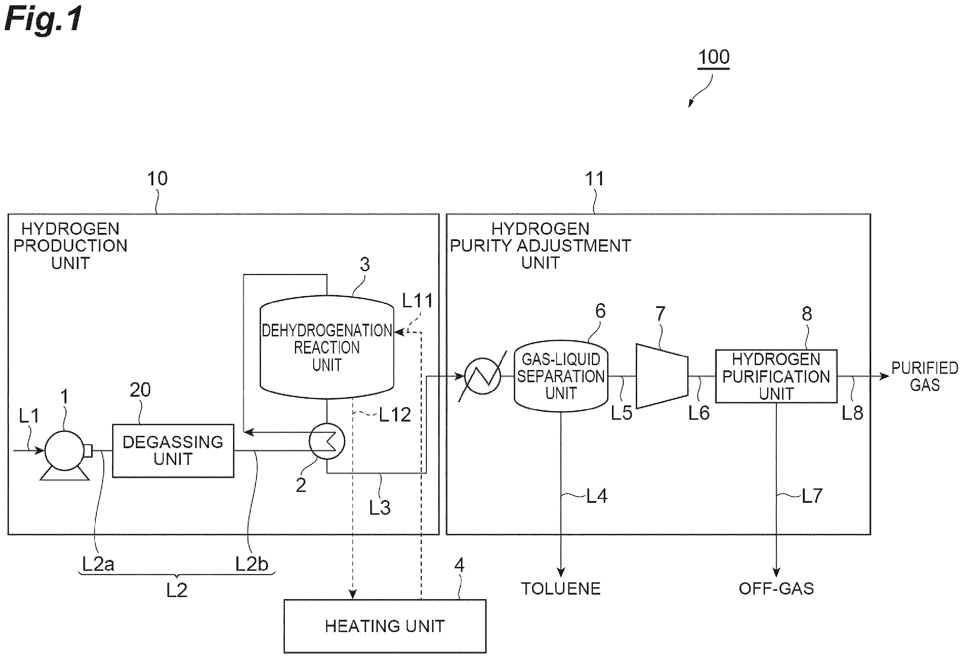

FIG. 1 is a block diagram illustrating a configuration of a hydrogen supply system according to an embodiment of the present disclosure.

### Description of Embodiments

Hereinafter, an appropriate embodiment of a hydrogen supply system according to the present disclosure will be described in detail with reference to the accompanying drawing. In the following description, the same reference numeral will be given of the same or equivalent portion, and redundant description will be omitted.

FIG. 1 is a block diagram illustrating a configuration of the hydrogen supply system according to the embodiment of the present disclosure. A hydrogen supply system 100 uses an organic compound (a liquid at an ordinary temperature) as a raw material. Note that, in a hydrogen purification process, a dehydrogenation product (organic compound (liquid at an ordinary temperature)) obtained by dehydrogenating the organic compound (a liquid at an ordinary temperature) that is a raw material is removed. Examples of the organic compound that is a raw material include an organic hydride. An appropriate example of the organic hydride is a hydride obtained by causing hydrogen that is massively produced at an oil refinery and aromatic hydrocarbon to react with each other. In addition, the organic hydride is not limited to aromatic hydrogenated compound, and includes 2-propanol system (hydrogen and acetone are produced). The organic hydride can be transported to the hydrogen supply system 100 by a tank lorry as a liquid fuel in a similar manner as in gasoline or the like. In this embodiment, as the organic hydride, methyl cyclohexane (hereinafter, referred to as "MCH") is used. In addition, as the organic hydride, a hydride of aromatic hydrocarbon such as cyclohexane, dimethyl cyclohexane, ethyl cyclohexane, decalin, methyl decalin, dimethyl decalin, and ethyl decalin is applicable. Note that, an aromatic compound is an appropriate example in which the amount of hydrogen contained is particularly large. The hydrogen supply system 100 can supply hydrogen to a fuel cell vehicle (FCV) or a hydrogen engine vehicle. Note that, application can also be made to a case of producing hydrogen from a natural gas containing methane as a main component, LPG containing propane as a main component, or liquid hydrocarbon raw materials such as gasoline, naphtha, kerosene, and light oil.

As illustrated in FIG. 1, the hydrogen supply system 100 according to this embodiment includes a liquid transfer pump 1, a heat exchange unit 2, a dehydrogenation reaction unit 3, a heating unit 4, a gas-liquid separation unit 6, a compression unit 7, and a hydrogen purification unit 8. Among these, the liquid transfer pump 1, the heat exchange unit 2, and the dehydrogenation reaction unit 3 pertain to a hydrogen production unit 10 that produces a hydrogen-containing gas. In addition, the gas-liquid separation unit 6, the compression unit 7, and the hydrogen purification unit 8 pertain to a hydrogen purity adjustment unit 11 that raises the purity of hydrogen. In addition, the hydrogen supply system 100 includes lines L1 to L12. Note that, in this embodiment, description will be given of a case where MCH is employed as a raw material, and a dehydrogenation product removed in a hydrogen purification process is toluene as an example. Note that, actually, not only toluene but also unreacted MCH, a small amount of by-products, and impurities exist, but in this embodiment, these are considered to be mixed with toluene and show the same behavior as in the toluene. Accordingly, in the following description, it is assumed that "toluene" is intended to include unreacted MCH and by-products.

The lines L1 to L12 are flow paths through which MCH, toluene, a hydrogen-containing gas, an off-gas, high-purity hydrogen, or a heating medium passes. The line L1 is a line for pumping MCH from an MCH tank (not illustrated) by the liquid transfer pump 1, and connects the liquid transfer pump 1 and the MCH tank to each other. The line L2 connects the liquid transfer pump 1 and the dehydrogenation reaction unit 3 to each other. The line L3 connects the dehydrogenation reaction unit 3 and the gas-liquid separation unit 6 to each other. The line L4 connects the gas-liquid separation unit 6 and a toluene tank (not illustrated) to each other. The line L5 connects the gas-liquid separation unit 6 and the compression unit 7 to each other. The line L6 connects the compression unit 7 and the hydrogen purification unit 8 to each other. The line L7 connects the hydrogen purification unit 8 and a supply destination of the off-gas to each other. The line L8 connects the hydrogen purification unit 8 and a purified gas supply device (not illustrated) to each other. The lines L11 and L12 connect the heating unit 4 and the dehydrogenation reaction unit 3 to each other. The lines L11 and L12 circulate a heat medium.

The liquid transfer pump 1 supplies MCH that becomes a raw material to the dehydrogenation reaction unit 3. Note that, MCH transported from the outside by a tank lorry or the like is stored in the MCH tank. MCH stored in the MCH tank is supplied to the dehydrogenation reaction unit 3 through the lines L1 and L2 by the liquid transfer pump 1.

The heat exchange unit 2 performs heat exchange between MCH that circulates through the line L2 and the hydrogen-containing gas that circulates through the line L3. A temperature of the hydrogen-containing gas emitted from the dehydrogenation reaction unit 3 is higher than that of the MCH. Accordingly, in the heat exchange unit 2, the MCH is heated by heat of the hydrogen-containing gas. According to this, the MCH is supplied to the dehydrogenation reaction unit 3 in a state in which a temperature is raised. Note that, the MCH is mixed with an off-gas supplied from the hydrogen purification unit 8 through the line L7, and is supplied to the dehydrogenation reaction unit 3.

The dehydrogenation reaction unit 3 is a device that subjects the MCH to a dehydrogenation reaction to obtain hydrogen. That is, the dehydrogenation reaction unit 3 is s device that extracts hydrogen from the MCH by the dehydrogenation reaction using a dehydrogenation catalyst. The dehydrogenation catalyst is not particularly limited, and is selected, for example, from a platinum catalyst, a palladium catalyst, and a nickel catalyst. These catalysts may be carried on a carrier such as alumina, silica, and titania. A reaction of the organic hydride is a reversible reaction, and a direction of the reaction varies in response to a reaction condition (a temperature or a pressure) (restricted by chemical equilibrium). On the other hand, the dehydrogenation reaction is always an endothermic reaction in which the number of molecules increases. Accordingly, conditions of a high temperature and a low pressure are advantageous. Since the dehydrogenation reaction is the endothermic reaction, dehydrogenation reaction unit 3 is supplied with heat from the heating unit 4 through a heat medium that circulates through the lines L11 and L12. The dehydrogenation reaction unit 3 includes a mechanism that capable of exchanging heat between the MCH that flows through the dehydrogenation catalyst and the heat medium from the heating unit 4. The hydrogen-containing gas extracted in the dehydrogenation reaction unit 3 is supplied to the gas-liquid separation unit 6 through the line L3. The hydrogen-containing gas in the line L3 is supplied to the gas-liquid separation unit 6 in a state of containing liquid toluene as a mixture.

The heating unit 4 heats the heat medium and supplies the heat medium to the dehydrogenation reaction unit 3 through the line L 11. The heat medium after heating is returned to the heating unit 4 through the line L12. The heat medium is not particularly limited, but an oil or the like may be employed. Note that, the heating unit 4 may employ an arbitrary medium as long as the dehydrogenation reaction unit 3 can be heated. For example, the heating unit 4 may directly heat the dehydrogenation reaction unit 3 or may heat the MCH that is supplied to the dehydrogenation reaction unit 3 by heating, for example, the line L2. In addition, the heating unit 4 may heat both the dehydrogenation reaction unit 3 and the MCH that is supplied to the dehydrogenation reaction unit 3. For example, a burner or an engine may be employed as the heating unit 4.

The gas-liquid separation unit 6 is a tank that separates toluene from the hydrogen-containing gas. The gas-liquid separation unit 6 stores the hydrogen-containing gas that contains toluene as a mixture to gas-liquid separate hydrogen that is a gas and toluene that is a liquid from each other. In addition, the hydrogen-containing gas that is supplied to the gas-liquid separation unit 6 is cooled down by the heat exchange unit 2. Note that, the gas-liquid separation unit 6 may be cooled down by a cooling medium from a cold heat source. In this case, the gas-liquid separation unit 6 includes a mechanism capable of exchanging heat between the hydrogen-containing gas in the gas-liquid separation unit 6 and the cooling medium from the cold heat source. Toluene separated by the gas-liquid separation unit 6 is supplied to a toluene tank (not illustrated) through the line L4. The hydrogen-containing gas separated by the gas-liquid separation unit 6 is supplied to the hydrogen purification unit 8 through the lines L5 and L6 by a pressure of the compression unit 7. Note that, when the hydrogen-containing gas is cooled down, a part (toluene) of the gas is liquified, and can be separated from a gas (hydrogen) that is not liquified by the gas-liquid separation unit 6. When a gas is maintained at a low temperature, separation efficiency is raised, and when a pressure is raised, liquefaction of toluene further proceeds.

The hydrogen purification unit 8 removes a dehydrogenation product (toluene in this embodiment) from the hydrogen-containing gas that is obtained by the dehydrogenation reaction unit 3 and is gas-liquid separated by the gas-liquid separation unit 6. According to this, the hydrogen purification unit 8 purifies the hydrogen-containing gas to obtain high-purity hydrogen (purified gas). The purified gas that is obtained is supplied to the line L8. Note that, the off-gas that is generated in the hydrogen purification unit 8 is supplied to the dehydrogenation reaction unit 3 through the line L7.

The hydrogen purification unit 8 is different depending on a hydrogen purification method that is employed. Specifically, in a case of using membrane separation as the hydrogen purification method, the hydrogen purification unit 8 is a hydrogen separation device including a hydrogen separation membrane. In addition, in a case of using a pressure swing adsorption (PSA) method or a temperature swing adsorption (TSA) method as the hydrogen purification method, the hydrogen purification unit 8 is an adsorption removal device including a plurality of adsorption towers which store an adsorbent that adsorb impurities.

Description will be given of a case where the hydrogen purification unit 8 uses membrane separation. In this method, a hydrogen-containing gas pressurized to a predetermined pressure by a compression unit (not illustrated) is caused to permeate a membrane heated to a predetermined temperature, a dehydrogenation product is removed, and a high-purity hydrogen gas (purified gas) can be obtained. The pressure of the gas permeated the membrane is reduced in comparison to a pressure before permeating the membrane. On the other hand, a pressure of a gas that does not permeate the membrane is approximately the same as a predetermined pressure before permeating the membrane. At this time, a gas that does not permeate the membrane corresponds to the off-gas in the hydrogen purification unit 8.

The kind of the membrane that is applied to the hydrogen purification unit 8 is not particularly limited, and a porous membrane (separation by a molecular flow, separation by a surface diffusion flow, separation by capillary condensation operation, separation by molecular sieving operation, and the like), or a non-porous membrane are applicable. As the membrane that is applied to the hydrogen purification unit 8, for example, a metal membrane (a PbAg-based membrane, a PdCu-based membrane, an Nb-based membrane, or the like), a zeolite membrane, an inorganic membrane (a silica membrane, a carbon membrane, or the like), and a polymer membrane (a polyimide membrane or the like) can be employed.

Description will be given of a case of employing the PSA method as the removal method in the hydrogen purification unit 8. An adsorbent that is used in the PSA method has a property of adsorbing toluene contained in the hydrogen-containing gas under a high pressure, and desorbing the adsorbed toluene under a low pressure. The PSA method uses the property of the adsorbent. That is, when the inside of an adsorption tower is set to a high pressure, toluene contained in the hydrogen-containing gas is adsorbed on the adsorbent and is removed to obtain a high-purity hydrogen gas (purified gas). In a case where an adsorption function of the adsorbent decreases, the inside of the adsorption tower is set to a low pressure to desorb toluene adsorbed on the adsorbent, and a part of the purified gas removed in combination is made to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

Description will be given of a case of employing the TSA method as the removal method in the hydrogen purification unit 8. An adsorbent that is used in the TSA method has a property of adsorbing toluene contained in the hydrogen-containing gas under an ordinary temperature, and desorbing the adsorbed toluene under a high temperature. The TSA method uses the property of the adsorbent. That is, when the inside of the adsorption tower is set to an ordinary temperature, toluene contained in the hydrogen-containing gas is adsorbed on the adsorbent and is removed to obtain a high-purity hydrogen gas (purified gas). In a case where the adsorption function of the adsorbent decreases, the inside of the adsorption tower is set to a high temperature to desorb toluene adsorbed on the adsorbent, and a part of high-impurity hydrogen removed in combination is caused to flow back to remove the desorbed toluene from the inside of the adsorption tower, thereby regenerating the adsorption function of the adsorbent. At this time, the hydrogen-containing gas that contains at least hydrogen and toluene which is discharged when removing toluene from the inside of the adsorption tower corresponds to the off-gas from the hydrogen purification unit 8.

Next, characteristic portions of the above-described hydrogen supply system 100 will be described.

An inorganic gas may be dissolved in the raw material that is used in the hydrogen supply system 100. The inorganic gas is a gas such as oxygen and nitrogen. With respect to this, the hydrogen supply system 100 includes a degassing unit 20. The degassing unit 20 removes the inorganic gas contained in the raw material on an upstream side of the dehydrogenation reaction unit 3 in a flow of the raw material.

Specifically, the degassing unit 20 is provided on the line L2 that connects the liquid transfer pump 1 and the dehydrogenation reaction unit 3 to each other. According to this, a raw material conveyed from the liquid transfer pump 1 is supplied to the degassing unit 20 through a line L2a. An inorganic gas component dissolved in the raw material is removed by the degassing unit 20. In addition, the raw material from which the inorganic gas component is removed is supplied to the dehydrogenation reaction unit 3 through a line L2b. Note that, the degassing unit 20 is provided downstream of the heat exchange unit 2. Accordingly, the heat exchange unit 2 is provided in the line L2b.

The degassing unit 20 is constituted by a device capable of removing an inorganic gas from the raw material. Specifically, the degassing unit 20 may be constituted by a degassing membrane separator. The degassing membrane separator is a device that performs degassing of the raw material by using a degassing membrane. The degassing membrane separator separates the raw material and the inorganic gas by causing the raw material to pass through the degassing membrane. Note that, the degassing unit 20 discharges the removed inorganic gas from the degassing unit 20 to the outside. Then, the degassing unit 20 supplies the raw material from which the inorganic gas is removed to the dehydrogenation reaction unit 3.

Note that, the device that constitutes the degassing unit 20 is not limited to the degassing membrane separator. For example, a device using dissolved gas separation by a liquid cyclone method, an ultrasonic gas separation method, or the like may be employed as the degassing unit 20.

Next, description will be given of an operation and an effect of the hydrogen supply system 100 according to this embodiment.

First, a hydrogen supply system that does not include the above-described degassing unit 20 will be described as a comparative example. In the hydrogen supply system, the inorganic gas such as oxygen and nitrogen may be contained in the raw material. The inorganic gas component is also contained in the hydrogen-containing gas after dehydrogenation. In addition, in the inorganic gas, oxygen generates water during the dehydrogenation reaction, and thus the dew point of the hydrogen-containing gas is raised. In this case, the purification load in the hydrogen purification unit 8 increases. As described above, there is a problem that the purification load of the hydrogen purification unit 8 is high. Therefore, it is necessary to remove the inorganic gas from the hydrogen-containing gas.

In contrast, the hydrogen supply system 100 according to this embodiment is a hydrogen supply system 100 that supplies hydrogen, and includes the dehydrogenation reaction unit 3 that subjects a raw material including a hydride to a dehydrogenation reaction to obtain a hydrogen-containing gas, the hydrogen purification unit 8 that removes a dehydrogenation product from the hydrogen-containing gas obtained in the dehydrogenation reaction unit 3 to obtain a purified gas including high-purity hydrogen, and the degassing unit 20 that removes an inorganic gas contained in the raw material on an upstream side of the dehydrogenation reaction unit 3 in a flow of the raw material.

In the hydrogen supply system 100, the dehydrogenation reaction unit 3 subjects the raw material to the dehydrogenation reaction to obtain a hydrogen-containing gas. In addition, the hydrogen purification unit 8 removes a dehydrogenation product from the hydrogen-containing gas obtained in the dehydrogenation reaction unit 3 to obtain a purified gas including high-purity hydrogen. Accordingly, the purification load of the hydrogen purification unit 8 may be influenced by a component contained in the hydrogen-containing gas from the dehydrogenation reaction unit 3. In contrast, the hydrogen supply system 100 includes the degassing unit 20 that removes the inorganic gas contained in the raw material on an upstream side of the dehydrogenation reaction unit 3 in a flow of the raw material. In this case, the dehydrogenation reaction unit 3 can subject the raw material in a state in which the inorganic gas is removed by the degassing unit 20 to the dehydrogenation reaction. According to this, it is possible to reduce the purification load of the hydrogen purification unit 8 due to the inorganic gas contained in the hydrogen-containing gas. As described above, the purification load of the hydrogen purification unit 8 can be reduced.

In the hydrogen supply system 100, the degassing unit 20 may be constituted by a degassing membrane separator. According to this, the degassing unit 20 can efficiently remove the inorganic gas from the raw material.

The present disclosure is not limited to the above-described embodiment. For example, in the above-described embodiment, a hydrogen station for FVC has been exemplified as the hydrogen supply system, but the hydrogen supply system may be, for example, a hydrogen supply system for distributed power supplies such as a power supply for household, and a power supply for emergency.

### Reference Signs List

3: dehydrogenation reaction unit, 8: hydrogen purification unit, 20: degassing unit, 100: hydrogen supply system.

## Claims

1. A hydrogen supply system that supplies hydrogen, comprising:
a dehydrogenation reaction unit that subjects a raw material including a hydride to a dehydrogenation reaction to obtain a hydrogen-containing gas;
a hydrogen purification unit that removes a dehydrogenation product from the hydrogen-containing gas obtained in the dehydrogenation reaction unit to obtain a purified gas including high-purity hydrogen; and
a degassing unit that removes an inorganic gas contained in the raw material on an upstream side of the dehydrogenation reaction unit in a flow of the raw material.

2. The hydrogen supply system according to claim 1,
wherein the degassing unit is constituted by a degassing membrane separator.
